# EUROPEAN PATENT SPECIFICATION

(11) **EP 0 444 039 B1**
(45) Date of publication and mention of the grant of the patent: **12.01.1994**
(21) Application number: 89907722.6
(22) Date of filing: 10.07.1989
(51) Int. Cl.: A47J 27/14, G07F 9/10

(54) **A FAST COOKER OF SPAGHETTIS, BUCATINIS, AND THE LIKE PASTA PRODUCTS**
EIN SCHNELLKOCHER FÜR SPAGHETTI, BUCATINI UND ÄHNLICHE TEIGWAREN
APPAREIL DE CUISSON RAPIDE POUR SPAGHETTIS, BUCATINIS ET AUTRES TYPES DE PATES

(30) Priority: 16.11.1988 IT 2263988
(43) Date of publication of application: 04.09.1991
(73) Proprietor: SPAGHETTI EXPRESS s.r.l., I-24100 BERGAMO (IT)
(72) Inventor: CAFFARELLA, Giuseppe, I-20128 Milan (IT)
(74) Representative: Righetti, Giuseppe
(86) International application number: EP8900796
(87) International publication number: WO9005474

(56) References cited:
- US-A- 2 018 419
- US-A- 3 937 135

## Description

This invention relates to a fast cooker of spaghettis, bucatinis, and the like pasta products in metered amounts, being of a type which comprises, located within a main frame, a cooking chamber and a normalization chamber, said normalization chamber being in communication with the cooking chamber to receive a metered amount of spaghettis and their cooking water therefrom and closed at the bottom by a gate openable to deliver the metered amount of spaghettis.

As disclosed in US-A-3.937.135, the cooking process for the metered amount or batch of spaghettis is completed within the normalization chamber, whereinto the batch of spaghettis is fed together with their cooking water, after a period of residence in the cooking chamber.

Following a further period of residence within the normalization chamber, the batch is delivered toward a shelf carrying a plate or dish on the gate being opened.

In view of the need to strain the batch of spaghettis to be delivered into the plate or dish, fast cookers currently in use are provided with a small overflow tube at the normalization chamber which is usually adjustable in height and performs the function of a spillway to discharge any cooking water above a given level while leaving in, however, a small residue thereof.

The height of tie overflow tube has to be adjusted while taking into account two conflicting requirements.

On the one side, the level of the overflow tube should be a high one, in order for the normalization sought to occur with largest possible amount of cooking water, virtually under a fully covered condition by the cooking water.

On the other side, that level should be instead the lowest possible, such that only a small amount of residual cooking water gets into the plate or dish together with the spaghettis on delivery of the batch of spaghettis thereinto.

Thus, prior fast cookers operating in the manner just described leave something to be desired, despite their simple construction, both from the standpoint of the cooking process, which occurs disuniformly through the batch, and the standpoint of the presentation of the dish to the consumer, due to the presence of excess water in the spaghettis.

It has been suggested of straining the pasta by means of a pipe specially provided for draining out the cooking water and including a normally closed on/off valve.

That valve would be opened on completion of the normalization step, to discharge all the water present within the normalization chamber.

Such an approach would permit of optimum pasta straining, but is elaborate construction-wise. It would be liable to failure from the valving members, usually electrically driven, and less than fully satisfactory from the sanitary standpoint due to an amount of the cooking water being apt to remain inside that pipe. This amount of water left would then become admixed to the cooking water from the next delivery, which take place with considerable delay.

The problem underlying this invention is to provide a fast cooker as specified above, which has such construction and performance characteristics as to overcome the above-noted drawbacks.

This problem is solved by a fast cooker as indicated being defined in Claim 1.

A further preferred embodiment of the invention is defined in Claim 2.

Further features and the advantages of a fast cooker according to the invention will become apparent from the following detailed description of a preferred embodiment thereof, given by way of illustration and not of limitation with reference to the accompanying drawings, where:

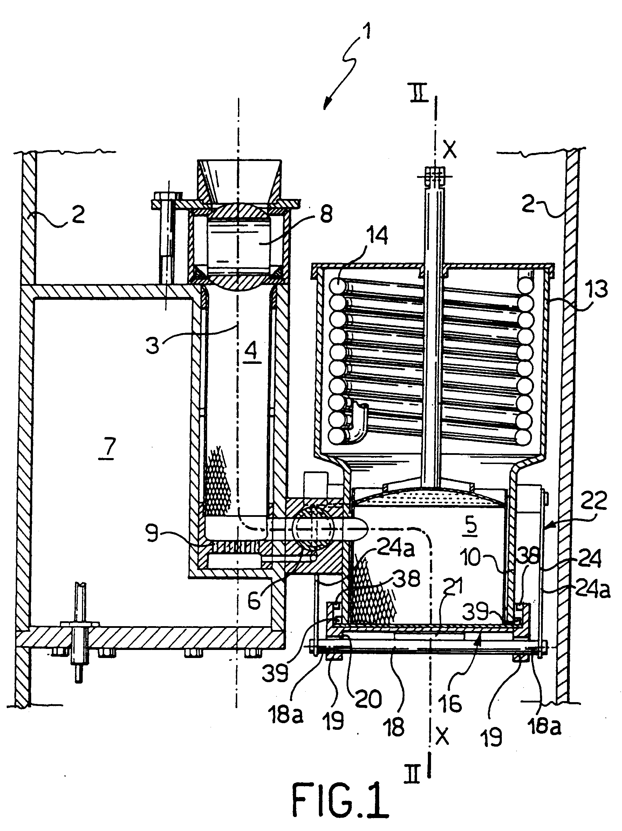

Figure 1 is a sectional front view of a fast cooker according to the invention, taken along the line I-I;
Figure 2 is a sectional side view of the fast cooker shown in Figure 1, taken along the line II-II; and
Figures 3 and 4 are part-sectional side views of a detail of the fast cooker shown in Figure 2, at successive stages of its operation.

A fast cooker 1 of spaghettis, bucatinis, and the like pasta products comprises, accommodated within a main frame 2, a spaghetti travel path 3 along which a cooking chamber 4 and a normalization chamber 5 locate, with the latter downstream from the former. An on/off valve 6 is provided between the cooking chamber 4 and the normalization chamber 5. Through that valve, to be opened as required, a batch of spaghettis and their cooking water are allowed to move from the cooking chamber 4 into the normalization chamber 5.

The cooking chamber 4 is encircled by a boiler 7 and provided at the top with an inlet valve 8 for admitting a metered amount of dry spaghettis thereinto for cooking, such spaghettis being supplied from a conventional distributor of spaghettis in metered amounts, not shown in the drawings.

Arranged inside the cooking chamber 4 is a hot water sprinkler 9.

The normalization chamber 5 has a cylindrical wall 10 about an axis X-X with a top edge 11 and bottom edge 12. At the top edge 11, the normalization chamber 5 connects to a dome 13 housing a heat exchanger 14. The normalization chamber 5 opens at the bottom downwards through a circular delivery opening 15 for the batches of cooked spaghettis.

The normalization chamber 5 is also provided with a gate 16 which is movable, in a manner to be explained, between a closed position where it abuts the edge 12 from below to block the opening 15 and an open position or position of delivery of a spaghetti batch.

The gate 16 has a portion 17 substantially in the form of a circular disk, and is carried on a pin 18 for tilting movement around it, said pin lying perpendicularly to the axis X-X. In particular, two ears 19 are formed on the disk portion 17 at the ends of a bottom diameter thereof, and are formed with respective eyes 20 for receiving the ends 18a of the pin 18 with a preset clearance. A leaf spring 21 is interposed to the disk portion 17 and the pin 18 to constantly bias the disk portion 17 away from the pin 18 and take up said clearance.

In the fast cooker 1 of this invention, the pin 18 is supported on the main frame 2 in a guided fashion for up and down movements toward and away from the opening 15.

A lever 22 is provided for the purpose which is of the first class, has a power arm 23 and resistance arm 24, and is pivoted about a pivot pin 25 carried on the main frame 2 laterally of the normalization chamber 5.

The resistance arm 24 bifurcates into two identical prongs 24a to whose ends the ends 18a of the pin 18 are attached.

The power arm 23 is led to a drive arrangement 26 provided on the main frame 2 and known per se.

In this example, the drive arrangement 26 comprises a crank shaft 27 having a crank 28 and crank journal 29 and being connected to the free end of the power arm 23.

A rotary movement of preset angular amplitude in either direction of the crank shaft 27 results in a full swing of the lever 22. As a consequence, the pin 18 will travel along an arc of a circle in a guided path, indicated at 30, downwards and upwards, away from and toward the opening 15.

The drive arrangement 26 is completed by conventional electrical means of controlling the rotational speed of the crank shaft and the standstill times thereof.

The gate 16 includes a spaghetti delivery chute and a pouring spout 32 for the cooking water from the spaghetti straining.

Note should be taken of that the chute 31 and pouring spout 32 are located on opposite sides about the pin 18 and project from the disk portion 17 cantilever-fashion.

The chute 32 is a short radial expansion of the disk portion 17 and coplanar with the latter.

The pouring spout 32 is a substantially funnel-shaped member, and connects to the disk portion 17 with a first, more flared portion 33 which extends from the chute 31 to gradually form a raised edge from the plane of the disk portion, and has a less flared portion 34 which is extended below the plane of the disk portion.

A wire mesh 35 is provided between the more flared portion 33 and the less flared portion 34 to hold the batch of spaghettis during the straining step.

It should be noted that the gate is sized such that the dead weight of the pouring spout 32 is greater than the dead weight of the chute 31. Thus, a resultant couple will constantly urge the gate 16 to swing about the pin 18 bringing the pouring spout 32 down.

It should be also noted that the gate 16 is provided with a striker 36, formed on the pouring spout 32 side, which is adapted to engage with a stop 37 formed on the main frame 2 at the normalization chamber 5. More specifically, said striker 36 is embodied by two indentical strips 38 jutting out inwards of the more flared portion 33, and the stop 37 is embodied by two identical pegs 39 projecting sideways from the normalization chamber 5.

Also noteworthy is that, within the main frame 2, below the normalization chamber 5, there are provided a cooking water collecting pan 40 on one side, and a shelf 41 for holding a plate or dish in readiness to receive a batch of spaghettis, on the other side.

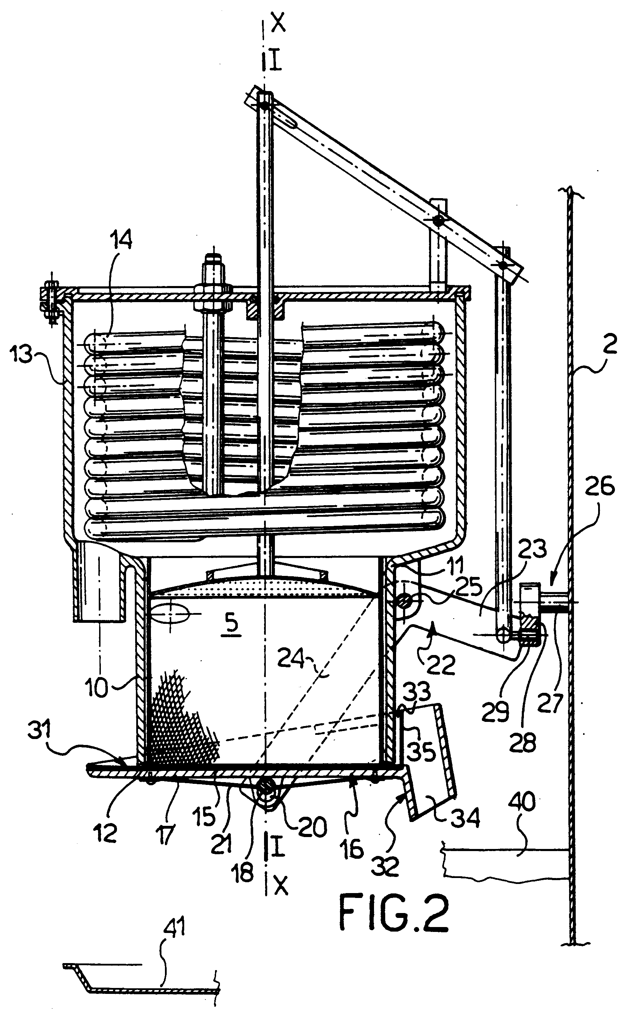

Operation of this cooker will be described herein below with reference to a starting condition (Figure 2) with the gate in its closed position.

In that condition, the pin 18 will be at the starting point of its path 30 and close against the opening 15 such that the gate 16 is held in sealed pressure contact with the bottom edge 12 of the normalization chamber by the spring 21.

In this starting condition, the normalization chamber 5 is containing a batch of spaghettis and their cooking water, as supplied from the cooking chamber via the valve 6.

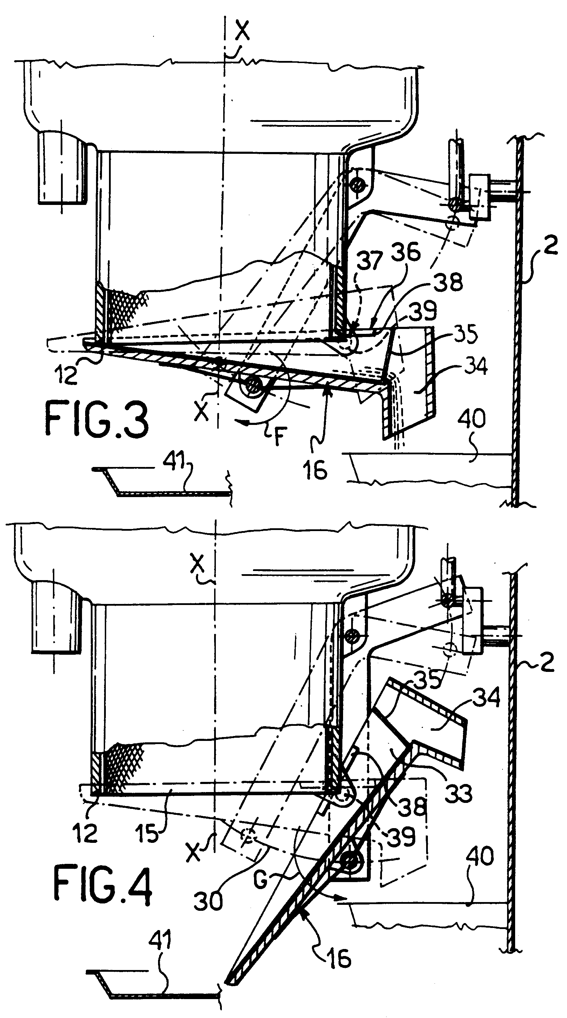

A first rotation of the crank shaft 27 through a preset angle will cause the pin 18 to move from its starting position to an intermediate position (Figure 3). At the same time, the gate 16 is caused to move from its closed position to an intermediate position. During that movement, the gate 16 is caused to tilt about the pin 18, by rotation in the direction of the arrow F, by the now predominant weight of the pouring spout 32. This rotational movement meets the continued opposition from the rubbing contact of the chute 31 with the bottom edge 12 of the normalization chamber 5.

The spaghettis are strained during that movement from the closed position to the intermediate position; the spaghettis being held back by the wire mesh 35, and the cooking water drained through the wire mesh 35 being discharged through the pouring spout 32 into the pan 40.

A desired stay of the gate 16 in that intermediate position may be arranged for a more thorough straining.

On the intermediate position being reached, the strips 38 of the striker 36 will locate closely adjacent to the pegs 39 of the stop 37, virtually in mutually facing relationship.

A second rotation of the drive shaft through a preset angle will cause the pin 18 to move from the intermediate position to a final position (Figure 4). In the meantime, the gate 16 will move from its intermediate position to an open position of delivery of the spaghettis.

During this movement, the strips 38 are held down by the pegs 39, and the gate 16, being held up on the pouring spout 32 side, will tilt about the pin 18 in the opposite direction, i.e. the direction of the arrow G, against the action of the pouring spout 32 dead weight.

During this movement, on the tilt angle of the gate 16 and chute 31 achieving a sufficient value, the batch of spaghettis, previously strained as explained above, will slide down the gate 16 and the chute 31 toward the shelf 41 on which a plate or dish has been placed.

A further rotation of the crank shaft 27 will restore the cooker 1 to its initial condition, in preparation for another delivery.

A major advantage of the fast cooker according to this invention resides in the unusually high quality level of the spaghettis it can dispense to the ultimate consumer. In fact, the spaghettis are allowed to reside within the normalization chamber together with all of their cooking water, to thus undergo faultless cooking, comparable to domestic cooking. In addition, prior to delivery for consumption, they are thoroughly relieved of all their cooking water, exactly like with traditional domestic straining.

A further advantage of the inventive fast cooker is that its construction and operation are quite simple, thereby a long service life can be expected therefrom with purely formal maintenance requirements.

It stands to reason that the fast cooker described herein above may be altered and modified in many ways by the skilled one to meet specific contingent demands without departing from the true scope of the invention as set forth in the appended claims.

## Claims

1. A fast cooker (1) of spaghettis, bucatinis, and the like pasta products in metered amounts, being of a type which comprises, located within a main frame (2), a cooking chamber (4) and a normalization chamber (5), said normalization chamber (5) being in communication with the cooking chamber (4) to receive a metered amount of spaghettis and their cooking water therefrom and closed at the bottom by a gate (16) openable to deliver the metered amount of spaghettis, characterized in that said gate (16) is movable from the closed position to the open position thereof through an intermediate spaghetti-straining position.

2. A fast cooker according to Claim 1, characterized in that said gate (16) is supported on a pin (18) guided for downward movement in said main frame (2) and comprises, on opposite sides about the pin, a spaghetti chute (31) and a cooking water pouring spout (32), said gate (16) being tiltable about said pin (18) in one direction under the weight of the pouring spout (32) from the closed position to the intermediate position, and in the opposite direction by the action of a stop (37) arranged to act on the pouring spout (32) side of the gate (16), from the intermediate position to the open position.

## Patentansprüche

1. Schnellkocher (1) für Spaghetti, Bucatini und ähnliche Teigwaren in dosierten Mengen der Art, die - innerhalb eines Hauptgestelles (2) gelagert - eine Koch- (4) und eine Normalisationskammer (5) umfaßt, wobei diese Normalisationskammer (5) mit der Kochkammer (4) zur Aufnahme einer daraus quellenden dosierten Menge Spaghetti und deren bezüglichen Kochwassers verbunden und unten durch eine zur Abgabe der dosierten Menge Spaghetti zu öffnende Klappe (16) geschlossen ist, dadurch gekennzeichnet, daß diese Klappe (16) von ihrer Schließstellung in ihre öffnungsstellung über eine Zwischenstellung zum Abgießen der Spaghetti Kippbar ist.

2. Schnellkocher nach Anspruch 1, dadurch gekennzeichnet, daß die genannte Klappe (16) über einen innerhalb des genannten Hauptgestelles (2) zur Abbewegung geführten Zapfen (18) gestützt ist und auf zum Zapfen entgegengesetzten Seiten eine Spaghettirutsche (31) und eine das Kochwasser abgießende Schnauze (32) umfaßt, wobei die genannte Klappe (16) um den genannten Zapfen (18) in eine Richtung unter dem Gewicht der Abgießschnauze (32) - von deren Schließ- bis zu deren Zwischenstellung - und in die entgegengesetzte Richtung unter der Wirkung eines Anschlages (37) kippbar ist; der auf die Abgießschnauzenseite der Klappe von deren Zwischen- bis zu deren öffnungsstellung wirkt.

## Revendications

1. Appareil de cuisson rapide (1) pour des quantités dosées de spaghettis, bucatinis et autres types de pâtes, du type comprenant une chambre de cuisson (4) et une chambre de normalisation (5) placées à l'intérieur d'un bâti principal (2), ladite chambre de normalisation (5) étant en communication avec la chambre de cuisson (4) pour recevoir de cette dernière une quantité dosée de spaghettis et respective eau de cuisson et étant fermée au sommet par un valet (16) susceptible d'ouverture pour distribuer la quantité dosée de spaghettis, caractérisé en ce que ledit volet (16) est mobile de la position fermée a la position ouverte à travers une position intermédiaire d'égouttage des spaghettis.

2. Appareil de cuisson rapide selon la revendication 1, caractérisé en ce que ledit volet (16) est supporté sur un pivot (18) guidé pour le mouvement vers le bas dans ledit bâti principal (2) et comporte, sur les côtés opposés du pivot, une goulotte (31) pour les spaghettis et un bec (32) de versement de l'eau de cuisson, ledit volet (16) étant basculant autour dudit pivot (18) dans une première direction, sous le poids du bec de versement (32) depuis la position fermée jusqu'à la position intermédiaire et, dans la direction opposée, par l'action d'un arrêt (37) destiné à agir sur le volet (16) du côté du bec de versement (32), depuis la position intermédiaire jusqu'à la position ouverte.
